## Europäisches Patentamt

## European Patent Office

## Office européen des brevets

(11) Veröffentlichungsnummer: **0 121 200**
A2

(12) **EUROPÄISCHE PATENTANMELDUNG**

(21) Anmeldenummer: **84103262.6**

(22) Anmeldetag: **24.03.84**

(51) Int. Cl.³: **G 05 D 23/19**
F 24 D 19/10

(30) Priorität: **02.04.83 DE 3312113**

(43) Veröffentlichungstag der Anmeldung:
**10.10.84 Patentblatt 84/41**

(84) Benannte Vertragsstaaten:
**AT CH DE FR GB IT LI NL SE**

(71) Anmelder: **Romacker, Bertold, Dr.**
**Föhrenweg 21**
**D-7300 Esslingen(DE)**

(72) Erfinder: **Romacker, Bertold, Dr.**
**Föhrenweg 21**
**D-7300 Esslingen(DE)**

(54) **Temperaturregeleinrichtung für Einzelräume.**

(57) Die Erfindung betrifft eine Temperaturregeleinrichtung für Einzelräume mit einem Steuergerät, einem Temperaturfühler und einem Stellglied an einem oder mehreren Heizkörpern. Die Erfindung besteht darin, daß das Steuergerät eine variabel programmierbare Verarbeitungselektronik aufweist und daß an die Verarbeitungselektronik über quasistetig arbeitende Zweipunktregler unstetig arbeitende Stellglieder angeschlossen sind.

Fig.1

Heilbronn, den 22.03.83
PTL-HN-Ma-ad - HN 83/15

Temperaturregeleinrichtung für Einzelräume

Die Erfindung betrifft eine Temperaturregeleinrichtung für Einzelräume mit einem Steuergerät, einem Temperaturfühler und einem Stellglied an einem oder mehreren Heizkörpern.

Herkömmliche Heizregelanlagen - insbesondere für Einfamilienhäuser - haben zwei Nachteile, die den optimalen Einsatz der eingesetzten Heizenergie behindern:

-   Das "Programm" besteht aus nur zwei Temperaturstufen, nämlich der tagsüber eingestellten Temperatur, bzw. der Temperatur der sogenannten Nachtabsenkung.

-   Die Temperaturregelung greift im ganzen Haus gleichzeitig ein, d. h. die individuell programmierte Temperaturregelung in den verschiedenen Räumen eines Hauses ist nicht möglich.

Der vorliegenden Erfindung liegt die Aufgabe zugrunde, eine Temperaturregeleinrichtung für Einzelräume anzugeben, deren Bedienung und Einstellung so einfach ist, daß sie auch von technisch nicht vorgebildeten Personen vorgenommen werden kann. Außerdem soll die Temperaturregeleinrichtung zu einer Heizkostenersparnis führen. Diese Aufgabe wird bei einer Temperaturregeleinrichtung der eingangs beschriebenen Art erfindungsgemäß dadurch gelöst, daß das Steuergerät eine variabel programmierbare Verarbeitungselektronik aufweist und daß an die Verarbeitungselektronik unstetig arbeitende Stellglieder angeschossen sind.

Eine derartige Temperaturregeleinrichtung enthält vorzugsweise einen Mikroprozessor, dem über Programmkarten Temperatur-Zeitverläufe für bestimmte Zeiträume vorgegeben werden. Die Programmkarten sind vorzugsweise optisch lesbar und können manuell beschriftet und wieder gelöscht werden. Dadurch ist es möglich, die Heizprogramme individuell auf einfachste Weise zu gestalten und die Heizzeiträume, wie Tage und Wochen, in so viele Einzelbereiche aufzuteilen, wie, den jeweiligen Bedürfnissen entsprechend, in den einzelnen Räumen unterschiedliche Temperaturen gewünscht werden. Die Stellglieder für die unstetig arbeitenden Zwei-Punkt-Regler bestehen vorzugsweise aus Motorventilen oder aus Magnetventilen. Weitere vorteilhafte Ausgestalungen der Erfindung ergeben sich aus den Unteransprüchen.

Die Erfindung wird nachstehend anhand eines Ausführungsbeispieles noch näher erläutert.
Die Figur 1 zeigt die Elektronik der Temperaturregeleinrichtung.
Die Figur 2 zeigt eine Programmkarte.
Die Figur 3 zeigt die Leseeinheit für die Programmkarte im Steuergerät.
Die Figur 4 zeigt die Leseeinheit in einer mit näheren Details dargestellten Ausführungform.

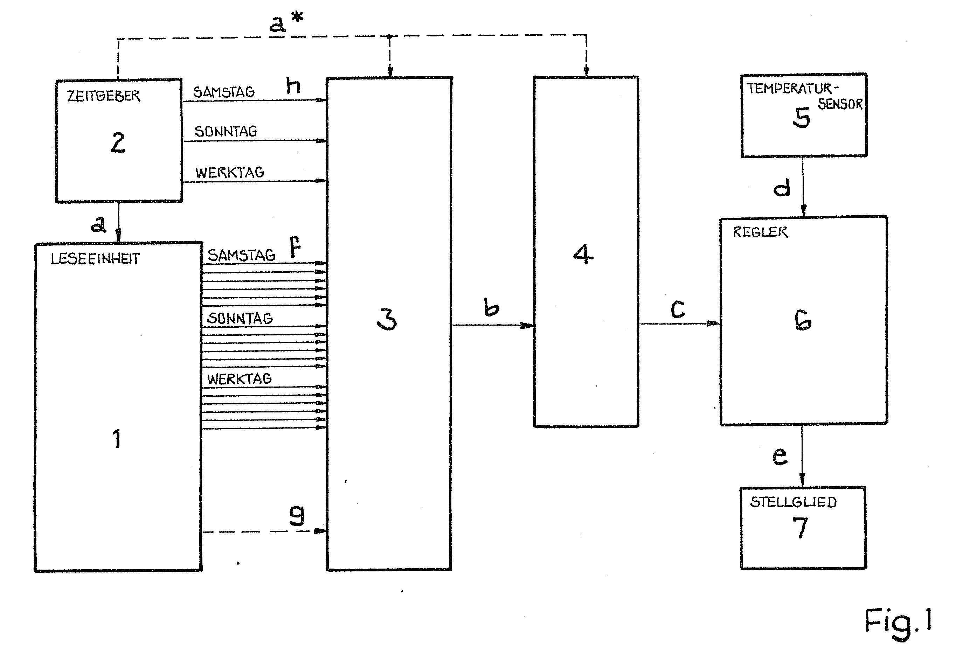

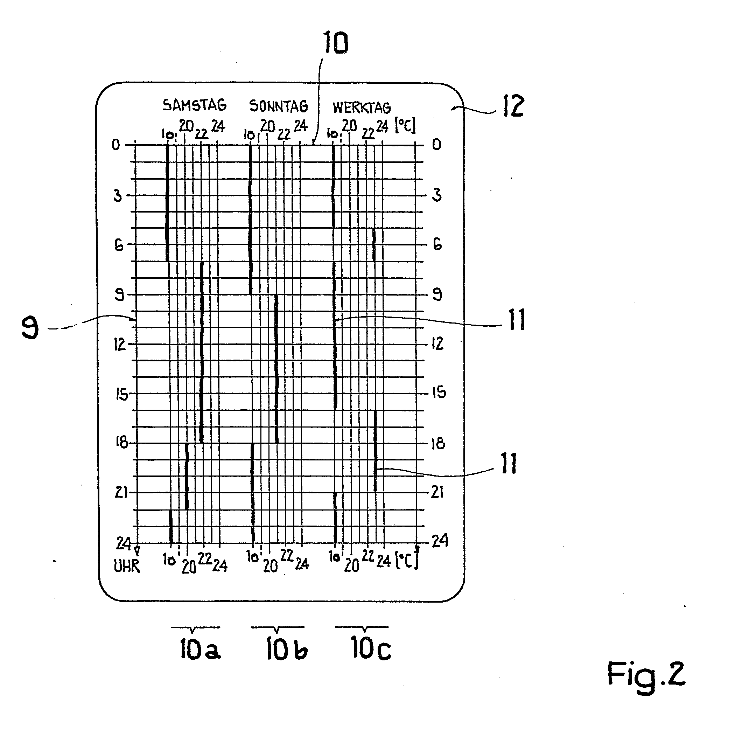

In Figur 1 ist mit 1 die Leseeinheit bezeichnet, in die eine Programmkarte gemäß der Figur 2 eingegeben wird. Die Daten aus der Programmkarte werden über die Ausgangsleitungen f in einen Speicher oder in einen Multiplexer 3 eingelesen. In diesen Speicher oder Multiplexer 3 werden ferner über die Leitungen h Zeiträume definierende Signale
eingegeben. Hierbei kann es sich beispielsweise um die
Eingabe des jeweiligen Wochentags oder um definierte,
innerhalb eines Tages liegende Zeiträume handeln. Vom
Zeitgeber 2 gelangt ferner ein Zeittaktsignal über die
Leitung a in die Leseeinheit 1, wenn die Programmkarte
mittels eines Taktsignals zeitsynchron transportiert
und ausgelesen wird. Dies ist dann der Fall, wenn die
von der Programmkarte dem jeweiligen Zeitpunkt entsprechenden Daten über Leitungen f und h in den Multiplexer 3
eingegeben werden, in dem dann durch Datenverknüpfungen
bzw. Datenabfrage das Ausgangssignal b zum Mikroprozessor
4 ermittelt wird.

Wenn die auf der Programmkarte enthaltenen Informationen in
einem einmaligen Abfrageprozess ausgelesen werden, besteht
der Schaltblock 3 aus einem Speicher, in den sämtliche
Daten aus der Programmkarte übernommen werden. Dann wird
über die Leitung g auf der Programmkarte auch ein Zeit-
oder Stellungsraster abgelesen, so daß im Speicher 3 die
Korrelation zwischen gewünschten Temperaturverläufen und
Zeit zur Verfüung steht. In diesem Fall entfällt die
Taktleitung a vom Zeitgeber zur Leseeinheit und wird durch
die Leitung a* ersetzt, die vom Zeitgeber 2 zum Speicher 3
bzw. direkt zum Mikroprozessor 4 führt. Dem Mikroprozessor 4 ist somit stets die Istzeit vorgegeben, so daß aus
den im Speicher enthaltenen Temperatur-Zeitverläufen die
jeweiligen Tempertursollwerte im Mikroprozessor 4 ermittelt werden können und entsprechende Signale über die
Leitung c an den Temperaturregler 6 weitergegeben werden.

Im Temperaturregler 6 wird die über die Leitung c eingegebene Sollwerttemperatur mit der vom Temperatursensor 5
über die Leitung d ankommenden Istwert-Temperatur verglichen. Aus diesem Vergleich resultiert das Ausgangssignal e, mit dem das Stellglied 7, bei dem es sich beispielsweise um ein Motor- oder ein Magnetventil handelt, gestellt wird. Das Ventil öffnet oder sperrt den Zustrom von Heizwasser in den Heizkörper. Das Ventil ist - abgesehen von den Umsteuervorgängen - immer ganz geöffnet oder ganz geschlossen, arbeitet also unstetig.

Die Programmierkarte 12 besteht beispielsweise gemäß Figur 2 aus transparenter Plastik. Auf ihr können die zur "Programmierung" erforderlichen Markierungen 11 in einfachster Weise, z. B. mittels Filzstift aufgebracht und wieder entfernt werden. Das Entfernen erfolgt derart, daß man sie z. B. mit einem feuchten Tuch oder anderen Mitteln ganz oder teilweise wieder abwischt oder abreibt. Durch die Beschriftung mit dem Filzstift kann für die Heizung ein ganzes Tagesprogramm vorgegeben werden. Für Werktage, Samstage und Sonntage können jeweils unterschiedliche Programme vorgesehen werden. So ist es z. B. möglich, ein Badezimmer jeweils werktags nur von 6.00 - 7.30 Uhr und von 20.00 - 21.00 Uhr, an Samstagen von 9.00 - 11.00 Uhr und von 19.00 - 23.00 Uhr auf eine frei vorwählbare Temperatur hochzuheizen. Gleichzeitig kann in einem anderen Raum des Hauses, z. B. im Wohnzimmer, ein völlig anderes Programm ablaufen, z. B. Heizen des Zimmers auf eine individuellvorgegebene Temperatur von 9.00 - 21.00 Uhr. Die Art der Programmierung geht aus Figur 2 hervor; sie ist derart einfach und leicht zu verändern, daß auch ein technisch nicht vorgebildeter ohne weiteres damit umgehen kann.

Die Programmierkarte wird nach erfolgter Beschriftung in das Steuergerät eingesteckt und kann zur Neuprogrammierung jederzeit wieder entnommen werden.
Die Steuerkarte ist beispielsweise in drei Regionen für den Temperaturregelbereich eingeteilt:

- 5 -

- Keine Markierung mit Filzstift zu einem bestimmten
  Zeitpunkt heißt: Die Heizung wird ausgeschaltet;
  die Ventile zu den Heizkörpern sind ganz geschlossen.

- Markierung bei 10° ist identisch mit einer Absenk-
  oder Bereitschaftstemperatur, d. h. in dem betreffenden Raum ist die Temperatur lediglich "überschlagen".
  Diese Betriebsart wird man für die Nächte in Wohnräumen vorsehen, damit sie nicht völlig auskühlen.

- Der eigentlich aktive Regelbereich ist der Bereich
  oberhalb der Absenktemperatur, im Beispiel gemäß
  Figur 2 19 bis 23 °C.

Wie aus der Figur 2 ersichtlich, ist die Programmkarte 12
vorzugsweise mit einem Koordinatensystem versehen, wobei an einer Achse 9 die Tageszeit und an der anderen
Achse 10 die Temperatur für einen oder mehrere bestimmte
Zeiträume 10a, 10b, 10c aufgetragen ist. In dieses Koordinatensystem wird das vorgesehene Programm für die Zeit/
Temperaturverläufe durch die Einfärbungen bzw. Markierungen 11 eingetragen.

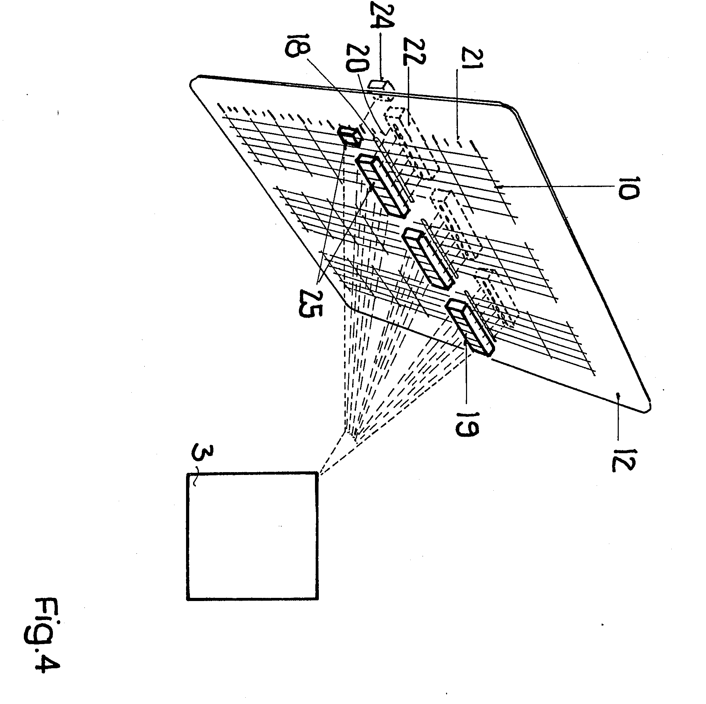

Wenn die Programmkarte im Zeittakt durch die Leseeinheit abgetastet wird, wird die Synchronisation zwischen
Kartenvorschub und den gewünschten Temperaturverläufen
durch den Zeitgeber 2 gemäß Figur 1 sichergestellt.
Wenn der Informationsinhalt der Karte jedoch in einem
einmaligen Lesevorgang in den Speicher 3 eingelesen
wird, muß die Karte ein Zeit- oder Stellungsraster enthalten, durch welches die Koorelation zwischen der Zeit und
den gewünschten Temperaturverläufen in bestimmten Zeiträumen nach dem Einlesen im Speicher fest vorgegeben ist.
Diese lesbaren Zeitmarken 21 sind beispielsweise auf der
Programmkarte 12 gemäß Figur 4 entlang der Zeitachse in
visuell und optisch lesbarer Form eingetragen.

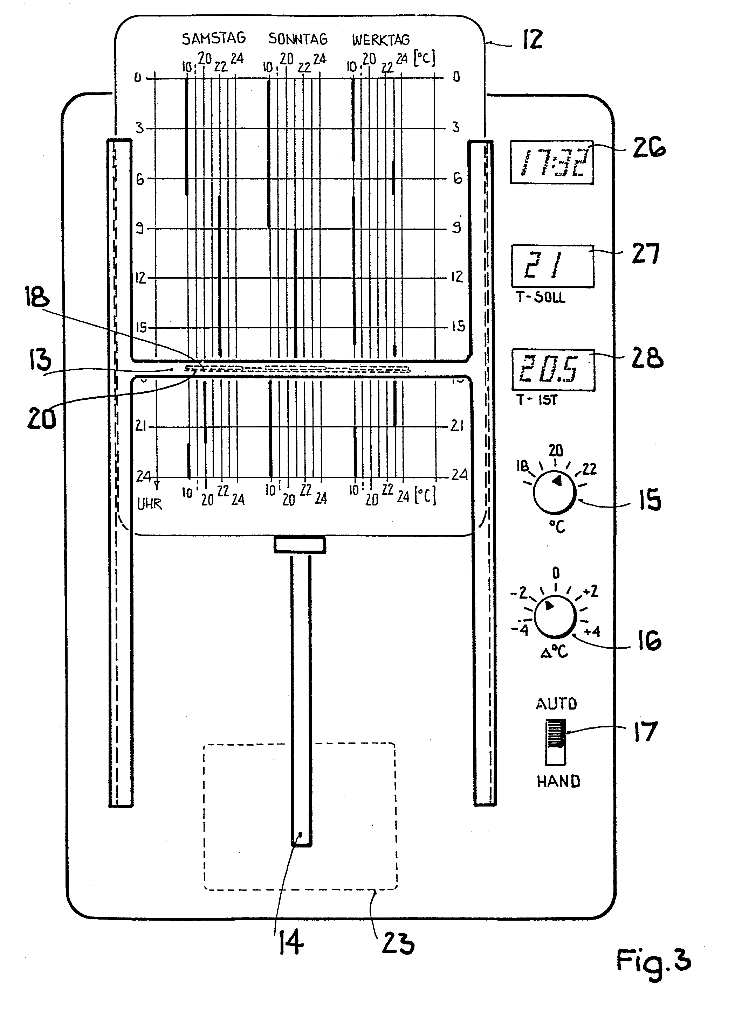

Im Steuergerät gemäß Figur 3 erfolgt die Ermittlung der Solltemperatur zu einem bestimmten Zeitpunkt durch die "Leseeinheit 13", in der die Programmkarte 12 von hinten, also aus dem Gerät heraus, durch einen Lichtschlitz 18 beleuchtet wird. Oberhalb der Programmkarte 12 befindet sich eine Anreihung von lichtempfindlichen Bauelementen, die feststellen, welche Bereiche der Steuerkarte mit Filzstift markiert, also lichtundurchlässig sind. Dadurch lesen die lichtempfindlichen Bauelemente die vorprogrammierte Temperatur ab. Um Störungen durch das Tageslicht auszuschließen, kann die Beleuchtung als Infrarotbeleuchtung ausgeführt sein. Die lichtempfindlichen Bauelemente müssen auf diese Infrarotbeleuchtung entsprechend angepaßt bzw. ausgewählt sein.

Die Programmkarte 12 wird beim zeittaktgesteuerten Auslesen der Informationen 11 durch einen Transportmechanismus zeitproportional durch die Koppelstrecke der Leseeinheit hindurchtransportiert. Damit ergibt sich der gewünschte zeitliche Programmablauf der Raumtemperatur. Zu einem bestimmten Zeitpunkt, z. B. um Mitternacht, geht die Programmkarte 12 im Schnellgang in ihre Ausgangsposition zurück.

Die Impulse für den Transportmechanismus des Steuergerätes entstammen dem Zeitgeber 2 gemäß Figur 1. Dieser Zeitgeber 2 liefert auch ein Signal zur Bestimmung des Wochentages. Wenn eine Temperatur außerhalb des normalen, durch die Programmkarte vorgegebenen Fahrplanes gewünscht wird, ohne daß es sich lohnt, die Programmkarte abzuändern oder gegen eine andere auszutauschen, kann das Steuergerät mit dem Betriebsartenwähler 17 auf Handbetrieb umgeschaltet und die gewünschte Temperatur mit dem Handbetrieb-Temperaturwähler 15 eingestellt werden.

Zur individuellen Anpassung im laufenden Betrieb kann mit dem "Korrektur"-Drehregler 16 des Steuergerätes eine Tem-

peraturjustierung durchgeführt werden. Sämtliche vorpro- grammierten Temperaturen verschieben sich zu jedem Zeitpunkt um den mit dem "Korrektur"-Drehregler eingestellten Betrag.

Das in der Figur 3 dargestellte Steuergerät enthält vorzugsweise den Zeitgeber 2, die Leseeinheit 1, den Multiplexer oder Speicher 3 und den Mikroprozessor 4 sowie den Temperaturregler 6. Beim zeittaktgesteuerten Vorschub der Programmkarte erfolgt der Kartentransport mit dem Führungsstift 14, der von einem Schrittschaltmotor 23 angetrieben wird. Das Steuergerät enthält vorzugsweise mehrere Anzeigen, so beispielsweise für die Solltemperatur 27, die Isttemperatur 28 und die Uhrzeit 26. Die Anzeige erfolgt vorzugsweise über LED-Ziffern oder durch Flüssigkristalle.

Beim einmaligen Einlesen der auf der Programmkarte 12 enthaltenen Informationen wird die Karte durch die Koppelstrecke 18 zwischen der Lichtquelle und den lichtempfindlichen Bauelementen in der Leseeinheit 13 hindurchgeschoben. Danach sind alle auf der Programmkarte 12 enthaltenen Informationen einschließlich des Zeitrasters im Speicher 3 der Verarbeitungselektronik enthalten. Diese Informationen können selbstverständlich wieder gelöscht oder durch Einlesen neuer Informationen auf einer anderen Programmkarte ersetzt werden.

Das Steuergerät muß nicht ständig in Betrieb sein. Es genügt z. B., wenn die Sollwerte der Temperatur alle 10 s abgelesen werden. Zum Ablesen selbst werden nur wenige ms benötigt. In der übrigen Zeit kann die Elektronik auf Bereitschaftsbetrieb geschaltet werden, bei der sie kaum Strom verbraucht. Im Bereitschaftsbetrieb kann die Beleuchtung des Lichtschlitzes entfallen.

Da auch der Schrittschaltmotor zwischen zwei einzelnen Schritten keinen Strom aufnimmt, ist der Stromverbrauch insgesamt sehr gering. Das Steuergerät kann somit im Bedarfsfall auch mit einer Batterie betrieben werden.

Aus der Figur 4 ergibt sich die Ausgestaltung der Leseeinheit im Detail. Zum Auslesen der auf der Speicherkarte 12 enthaltenen Informationen wird eine Koppelstrecke 20 verwendet, die zwischen Lichtquellen 22 und der Abtasteinheit 19 zustandekommt. Durch diese Koppelstrecke wird die Programmkarte im Zeittakt oder durch einmaliges Einlesen abgetastet, wobei die streifenförmige Koppelstrecke 20 vorzugsweise parallel zur Temperaturachse 10 auf der Programmkarte verläuft. Die Lichtquelle kann aus einer einheitlichen Lichtquelle oder aus angereihten Einzellichtquellen 24 bestehen. Diese Einzellichtquellen 24 sind beispielsweise Infrarotlicht aussendende Dioden. Die Lichtempfänger sind wiederum vorzugsweise Infrarotlicht-empfindliche Photoempfänger, insbesonere Photodioden oder Phototransistoren 25. Jeder möglichen Einfärbung 11 bzw. 21 auf der Programmkarte 12 muß ein Empfängerbauelement zugeordnet sein, so daß die Einzelinformationen auf der Programmkarte voneinander getrennt werden. Bei einer Programmkarte, wie sie in der Figur 2 dargestellt ist, die insgesamt die Informationen für 3 verschiedene Tage über die Tageszeit bei 6 Temperaturstufen für jeden Einzeltag umfaßt, benötigt man somit 18 Empfängerdioden wenn die Karte kein gesondertes Zeitraster enthält. Enthält die Karte gemäß der Figur 4 jedoch ein abtastbares Zeitraster 21, so muß zum Erfassen der Zeitmarken eine gesonderte Empfängerdiode vorgesehen sein. In die Koppelstrecke 20 ist vorzugsweise eine Blende 18 eingefügt, so daß das Licht nur innerhalb eines schmalen, zur Temperaturachse 10 auf der Programmkarte 12 parallel verlaufenden Streifen abgetastet werden kann. Die von den Empfängern 25 erfaßten Einzelinformationen werden in den angeschlossenen Multiplexer bzw. Speicher 3 übertragen. Wenn die Informationen durch einen einmaligen Einlesevorgang in den Speicher eingelesen werden ist es sinnvoll, eine Plausibilitätskontrolle einzufügen, durch die die erfolgreiche Datenübernahme beispielsweise durch ein optisches oder akustisches Signal quitiert wird.

Die Qualität der Temperaturregelung - z. B. ausgedrückt durch die "Schwankungsbreite" der Raumtemperatur bei Auslegung als Zweipunktregelung - ist umso besser, je niedriger der Leistungsüberschuß ist; d. h. je weniger die Temperatur bei völlig geöffnetem Stellglied bzw. Ventil für den oder die Heizkörper über die gewünschte Sollwerttemperatur hinausgeht. Daraus folgt, daß es zweckmäßig ist, eine außentemperaturabhängige Steuerung oder Regelung der Vorlauftemperatur der Heizanlage derart vorzunehmen, daß die Vorlauftemperatur mit sinkender Außentemperatur immer höher wird. Hieraus ergibt sich die Möglichkeit, mit einem relativ kleinen, auch bei schwankenden Außentemperaturen konstanten Leistungsüberschuß zu arbeiten. Dadurch werden nicht nur die Wärmeverluste vermindert, sondern auch die Qualität der Einzelraum-Temperaturregelung durch Verminderung der Schwankungsbreite erhöht.

Der Regler ist ein Zweipunktregler (Unstetiger Regler), wobei als Stellglied ein Motorventil oder ein unstetig arbeitendes Ventil (Magnetventil) verwendet wird. Durch die Anwendung von Rückführungen wird mit dem unstetigen Regler ein quasi-stetiges Verhalten der Regelgröße erzeugt. Dabei werden je nach verlangter Regelqualität verzögerte, einseitige oder doppelseitige, nachgebende oder nichtnachgebende Verfahren angewendet. Diese Verfahren sind ansich bekannt. Die Rückführungen können entweder hardwaremäßig oder im Mikrocomputer softwaremäßig oder als Kombination beider Verfahren erzeugt werden.

Der Mikroprozessor kann auch so programmiert werden, daß die Änderungsgeschwindigkeit der Regelgröße ermittelt und im Mikroprozessor zur Steuerung des Tastverhältnisses für den Zwei-Punkt-Regler herangezogen wird. Dadurch können Überschwingvorgänge der Regelgröße, also der Raumtemperatur, extrem klein gehalten werden.

Heilbronn, den 22.03.83
PTL-HN-Ma-ad - HN 83/15

Patentansprüche

1) Temperaturregeleinrichtung für Einzelräume mit einem Steuergerät, einem Temperaturfühler und einem Stellglied an einem oder mehreren Heizkörpern, dadurch gekennzeichnet, daß das Steuergerät (1) eine variabel programmierbare Verarbeitungselektronik (3, 4, 6) aufweist, und daß an die Verarbeitungselektronik unstetig arbeitende Stellglieder (7) angeschlossen sind.

2) Temperaturregeleinrichtung nach Anspruch 1, dadurch gekennzeichnet, daß das Stellglied (7) ein Motorventil oder ein Magnetventil ist.

3) Temperaturregeleinrichtung nach Anspruch 1, dadurch gekennzeichnet, daß die Verarbeitungselektronik (3, 4, 6) einen Mikroprozessor (4) enthält, und daß für die Programmeingabe Programmkarten (12) vorgesehen sind, deren Informationsinhalt die Korrelation zwischen Zeit- und Temperaturverlauf wiedergibt.

4) Temperaturregeleinrichtung nach Anspruch 3, dadurch gekennzeichnet, daß die auf der Programmkarte (12) enthaltenen Informationen (11) optisch lesbar sind.

5) Temperaturregeleinrichtung nach Anspruch 3 oder 4, dadurch gekennzeichnet, daß zum Übertragen der Informationen (11) auf der Programmkarte (12) in den Mikroprozessor (4) eine Lichtquelle (22) zur Beleuchtung der Karte (12) vorgesehen ist, daß ferner eine lichtempfindliche Abtasteinheit (19) vorhanden ist, die das durch die Karte hindurchtretende Licht in einer dem Informationsinhalt der Karte entsprechenden Aufteilung aufnimmt und daß ein Multiplexer (3) zwischen die Abtasteinheit und den Mikroprozessor geschaltet ist, oder ein Speicher zur Aufnahme der Informationen vorgesehen ist.

6) Temperaturregeleinrichtung nach einem der vorangehenden Ansprüche, dadurch gekennzeichnet, daß in das Steuergerät ein Zeitgeber (2) integriert ist, der die Istzeit und Datum oder Wochentag für den Mikroprozessor vorgibt.

7) Temperaturregeleinrichtung nach einem der Ansprüche 3 - 5, dadurch gekennzeichnet, daß die Programmkarte (12) aus einem transparenten Träger aus Kunststoff oder Glas besteht und Markierungen (11, 21) für die Zeit und die Temperatur bzw. die Stellung des Stellglieds trägt.

8) Temperaturregeleinrichtung nach einem der Ansprüche 3 - 5 oder 7, dadurch gekennzeichnet, daß die Programmkarte (12) mit einem Koordinatensystem (9, 10) versehen ist, wobei an einer Achse (9) die Tageszeit und an der anderen Achse (10) die Temperatur für einen oder mehrere bestimmte Zeiträume (10 a, 10 b, 10 c) (Tage, Woche) aufgetragen ist und daß in das Koordinatensystem die vorgesehenen Programme für die Zeit/Temperaturverläufe durch Einfärbungen (11) eingetragen sind.

9) Temperaturregeleinrichtung nach Anspruch 8, dadurch gekennzeichnet, daß die strichförmigen Einfärbungen (11) manuell eintragbar und löschbar sind.

10) Temperaturregeleinrichtung nach einem der vorangehenden Ansprüche, dadurch gekennzeichnet, daß die optische Leseeinheit (1) im Steuergerät eine streifenförmige optische Koppelstrecke (20) zwischen der Lichtquelle (22) und der Abtasteinheit (19) aufweist, über die die Programmkarte (12) im Zeittakt oder durch einmaliges Einlesen der auf der Karte enthaltenen Gesamtinformationen (21, 11) in einen Speicher abtastbar ist, wobei die streifenförmige Koppelstrecke parallel zur Temperaturachse (10) auf der Programmkarte verläuft.

11) Temperaturregeleinrichtung nach Anspruch 10, dadurch gekennzeichnet, daß zum Vorschub der Programmkarte (12) durch die optische Koppelstrecke (20) ein im Zeittakt gesteuerter Schrittschaltmotor (23) vorgesehen ist.

12) Temperaturregeleinrichtung nach Anspruch 10 oder 11, dadurch gekennzeichnet, daß die optische Koppelstrecke (20) zwischen Infrarotlicht-aussendenden Leuchtdioden (24) und Infrarotlicht-empfindlichen Photoempfängern (25) zustande kommt, und daß die Einfärbungen (11, 21) auf der Programmkarte (12) für Infrarotlicht undurchlässig sind.

13) Temperaturregeleinrichtung nach einem der vorangehenden Ansprüchen, dadurch gekennzeichnet, daß das Steuergerät auf manuellen Betrieb (17) umschaltbar ist und daß ein Korrekturregler (16) zur Parallelverschiebung des programmierten Temperaturverlaufs vorhanden ist.

14) Temperaturregeleinrichtung nach Anspruch 11, dadurch gekennzeichnet, daß beim Einlesen des vorgegebenen Programms im Zeittakt eine Aktivierung des Steuergeräts und der optischen Leseeinheit nur während der Abfragezeiten vorgesehen ist, und daß in den Pausenzeiten zwischen den Abfragezeiten eine Umschaltung auf stromsparenden Bereitschaftsbetrieb erfolgt.

15) Temperaturregeleinrichtung nach einem der vorangehenden Ansprüche, dadurch gekennzeichnet, daß neben dem Raumtemperaturfühler ein Fühler für die Außentemperatur vorgesehen ist, der die Vorlauftemperatur des Heizwassers so beeinflußt, daß bei niedriger Außentemperatur eine hohe Vorlauftemperatur eintritt und umgekehrt, und daß der Mikroprozessor derart programmiert ist, daß mit den von dem Temperatursensor gelieferten Daten die Schwankungsbreite der Raumtemperatur klein bleibt, wobei der Mikroprozessor einen "unstetigen Regler mit quasistetigem Verhalten" dadurch nachbildet, daß ein Zweipunktregler mit einer sogenannten "Rückführung" beaufschlagt wird.

16) Temperaturregeleinrichtung nach einem der vorangehenden Ansprüche, dadurch gekennzeichnet, daß die die Regelqualität verbessernde Rückführung als verzögerte einseitige, verzögerte beidseitige oder verzögert nachgebende Rückführung ausgebildet ist.

17) Temperaturregeleinrichtung nach Anspruch 16, dadurch gekennzeichnet, daß die durch Rückführungen erzielbare Qualitätsverbesserung der Regelung durch eine dem Mikroprozessor vorgegebene "Software" nachgebildet ist.

18) Temperaturregeleinrichtung nach Anspruch 17, dadurch gekennzeichnet, daß die Änderungsgeschwindigkeit der Regelgröße ermittelt und im Mikroprozessor zur Steuerung des Tastverhältnisses des Zweipunktregelverhaltens derart herangezogen wird, daß Überschwingvorgänge der Regelgröße extrem klein bleiben.

19) Temperaturregeleinrichtung nach einemd er vorangehenden Ansprüche, dadurch gekennzeichnet, daß das Steuergerät Anzeigen für die Solltemperatur (27), die Ist-Temperatur (28) und die Uhrzeit (26) aufweist.

20) Temperaturregeleinrichtung nach einem der vorangehenden Ansprüche, gekennzeichnet durch die Verwendung zur Steuerung sämtlicher Heizkörper in einer geschlossenen Raum- oder Wohneinheit.

Fig.1

0121200

Fig.2

0121200

Fig.3

Fig.4